# EUROPEAN PATENT APPLICATION

(11) **EP 2 546 050 A1**
(43) Date of publication of application: **16.01.2013**
(21) Application number: 11173491.9
(22) Date of filing: 11.07.2011
(51) Int. Cl.: B29C 70/44, B29C 51/10, B29C 51/14, B32B 5/02

(54) **Device and method for manufacturing of laminate structures**

(71) Applicant: Componia AG, 6052 Hergiswil NW (CH)
(72) Inventor: Zeilon, Jacob, SE-181 62 LIDINGÖ (SE)
(74) Representative: Loqvist, Gabriel Mathias

(57) **Abstract**

The present invention relates to a device (10) for manufacturing a laminate structure comprising at least one foil. The device (10) comprises: an air tight housing enclosing; a manufacturing tool (20) comprising which one surface of the laminate structure is formed to the desired shape; a resin applying device; means for securing the foil; heating means (22); and means for reducing/increasing and controlling the pressure in each of said first (15) and second (16) compartment independently of each other. The invention furthermore relates to a method for manufacturing of a laminate structure in the claimed device.

## Description

### Field of the invention

The present invention relates to a device and a method for manufacturing of laminate structures.

### Background of the invention

Within many different technical areas there is a growing need for articles/parts made of laminate structures in order to achieve articles with the desired design, strength and reduced overall weight. Examples of articles are different types of panels for indoor and outdoor use in buildings and vehicles, furniture, different types of casings and housings etc.

The described types of articles are up to now mostly produced in moulds with the design of the desired article. The mould is first covered by a foil or material that will constitute the outer surface of the final article. Secondly, a reinforcement layer is applied within the mould and the entire mould covered by an air tight shielding layer (not included in the laminate structure). The space between the mould and the shielding layer is sealed and the air between the shielding layer and the mould evacuated by one or more pumps. When as much air as possible is evacuated, resin is introduced into the reinforcement layer at one or more positions within the mould. The resin is then drawn through the fibre layer by the vacuum between the shielding layer and the mould until the entire reinforcement layer is wetted and the resin cured to achieve the desired adhesive strength between the surface layer and the reinforcement layer. The described method is often referred to as "Resin Transfer Method (RTM)". However, the described method suffers from some several drawbacks. First, the required time to achieve the complete wetting of the reinforcement layer is long which makes the method economically impossible to use for producing less expensive articles in higher volumes. Secondly, it is very difficult to ensure the required complete wetting of the entire reinforcement layer, and in case of incomplete wetting the article will not achieve the desired strength and be considered waste.

There is consequently a need for an improved device for manufacturing of laminate structures as well as an improved method for manufacturing of laminate structures.

### Summary of the invention

The present invention, defined in the appended claims, provides a device for manufacturing of laminate structures and a method for manufacturing of laminate structures that fulfils the needs defined above.

The claimed device for manufacturing of a laminate structures comprising at least one foil comprises:
an air tight housing enclosing a manufacturing chamber, said housing comprising at least a first and a second housing section and is openable;
a manufacturing tool comprising at least one mould in which one surface of the laminate structure is formed to the desired shape;
a resin applying device for applying resin in the mould, or moulds;
means for securing the foil of the laminate structure in the manufacturing chamber, said means secures said foil in such a way that the manufacturing chamber is divided into a first and a second air tight compartment separated from each other by the foil in such a way that said tool is arranged in the first or second compartment;
heating means for heating said foil, said means are arranged in the first and/or the second compartment; and
means for reducing/increasing and controlling the pressure in each of said first and section compartment independently of each other.

The claimed method for manufacturing of a laminate structure in the device described above comprises the steps:
- arranging a first foil in the at least one mould;
- arranging a reinforcement layer on the first foil in the mould;
- applying a predetermined amount of resin in a predetermined pattern on the reinforcement layer;
- fasten a second foil in the securing means for the foil;
- close the housing;
- heat the second foil;
- reduce or increase the pressure in the first and second compartment simultaneously to a predetermined pressure;
- if the pressure was reduced in previous step, increase the pressure in the compartment where the tool not is arranged, and if the pressure was increased in the previous step reduce the pressure in the compartment where the tool is arranged; and
- maintain the laminate structure in the mould for a predetermined time and then remove the laminate structure;

The claimed device, in combination with the claimed method for manufacturing of laminate structures, makes it possible to manufacture laminate structures in a more efficient way and reduce the overall process time for each laminate structure considerably.

This is achieved since the resin that is used for bounding the foil and the reinforcement layer is applied in strings in a predetermined amount and pattern that ensures that the entire reinforcement layer will be wetted before the reinforcement layer and the resin are covered by the second foil. After the resin is applied, the second foil is attached in the securing means for the foil and the housing is closed in order to divide the chamber into a first and second air tight compartment. The second foil is heated to increase the elasticity of the foil and facilitate the forming of the initially flat foil into the desired shape. The pressure within the first and second chamber is either reduced or increased simultaneously to avoid deformations of the second foil.

The pressure within the first and second compartment is either reduced or increased to a predetermined level, and when the predetermined level is reached the pressure in the chamber opposite the chamber where the tool and mould are arranged is increased, if the pressure in the first and second chamber were reduced, alternatively the pressure is reduced in the compartment where the tool and mould are arranged if the pressure in the first and second compartment initially were increased in order to force the foil down into the mould by the increased or reduced pressure in the selected compartment. This is a major advantage since the force from the increased or reduced air pressure in the compartment will press the first foil, the reinforcement layer and the second foil together and at the same time spread the resin in the reinforcement layer. The curing of the resin could be activated by the heating means that increases the temperature within the mould to the temperature where the curing of the adhesive is activated.

The invention has further advantages, for example the waste material is reduced since the accuracy of the method reduces the amount of articles that not will have the desired quality. Furthermore the manufacturing could be automated and used for production of large quantities to a reduced cost, and the automated manufacturing process improves the working conditions in the production plant.

In one embodiment of the device according to the invention, the device comprises at least one air evacuation arrangement for each of the moulds in the tool. This is a favourable embodiment since the arranging of the first foil in the mould could be facilitated by the air evacuation arrangement that is assisting in shaping the foil in the mould by sucking the foil into the mould. In order to further facilitate the arranging of the first foil in the mould, the foil could be heated to increase the elasticity of the foil prior to the arranging in the mould.

Preferred embodiments of the air evacuation arrangement comprise one or more air outlets, alternatively an air permeable surface, arranged in the mould. The number of air outlets or type of air evacuation arrangement is selected depending on the size and shape of the desired article. Further air outlets is preferably used when the article has a considerably size or complex design.

In one embodiment of the device the foil of the sandwich laminate is clamped between the at least two housing sections. This is a simple and reliable arrangement that provides the desired securing of the foil as well as the desired dividing of the manufacturing chamber into the first and second compartment.

In one embodiment of the device, the tool is integrated in one of the at least two housing sections. This is a favourable embodiment since the number of different parts of the device is kept at a reasonable level. Furthermore this, embodiment provides a device that is easy to produce and use.

In one embodiment of the device, the heating means comprises at least one radiation heater. This is a favourable embodiment since the radiation heater will be able to heat the foil in an efficient way even though a considerably amount of air has been evacuated from the compartments.

In one embodiment of the device, the means for reducing/increasing and controlling the pressure comprises at least one pump, at least air inlet/outlet and one valve for each compartment in order to regulate the pressure in the compartments, and monitoring means to be able to monitor the present pressure in each compartment. This embodiment of the device provides a device that makes it possible to control and monitor the manufacturing which is favourable in order to achieve the desired quality of the manufactured structure.

In one embodiment of the device, the resin applying device comprises at least one nozzle in order to apply strings of resin in a predetermined pattern. The nozzle makes it possible to apply the resin in the intended pattern with high accuracy.

In one embodiment of the method, the resin is applied in a string drawn in a predetermined pattern without crossing the already applied string. This is a favourable pattern for the resin since the amount of air trapped between the foils and in the structure could be reduced further since the air is allowed to exit the structure without passing through a string of resin.

One embodiment of the device comprises means for providing an air tight sealing between the first and second foil of a laminate structure, said means provides the sealing in the area surrounding the mould. This is favourable since the sealing between of the foils ensures that no air will penetrate the area between the first and second foil when the housing is opened. Penetrating air could reduce the bounding strength of the structure if the resin not has been completely cured. The sealing between the foils furthermore makes it possible to reduce the time required for curing or the applied resin since the low pressure within the structure ensures sufficient strength to the structure to allow for earlier removal from the mould even though the curing of the resin is not completed entirely. The overall process time could thereby be reduced and the mould free for use at an earlier time.

In one embodiment of the invention, the device comprises means for supplying cooled or heated air via the inlet/outlet to the respective compartment of the manufacturing chamber, and the method comprises the additional step of either supply heated or cooled air into the first and second compartment in order to reduce the overall process time for manufacturing a laminate structure. This is a favourable embodiment since for example the curing time for the resin could be reduced in the temperature in the compartment is increased, and furthermore the heated elastic foils would more quickly return their normal characteristics if they are cooled in an efficient after they have been shaped in the mould.

The different embodiments of the device and the method could of course be combined in different ways without departing from the scope of the invention that will be described more in detail in the detailed description.

### Brief description of the drawings

Two schematic embodiments of the device according to the invention are illustrated in figure 1 a and 1 b, and the different steps of the method for manufacturing a laminate structure are schematically illustrated in figures 2 to 8. In figure 9 an advantageous pattern for the applied string of resin is illustrated.

### Detailed description of embodiments

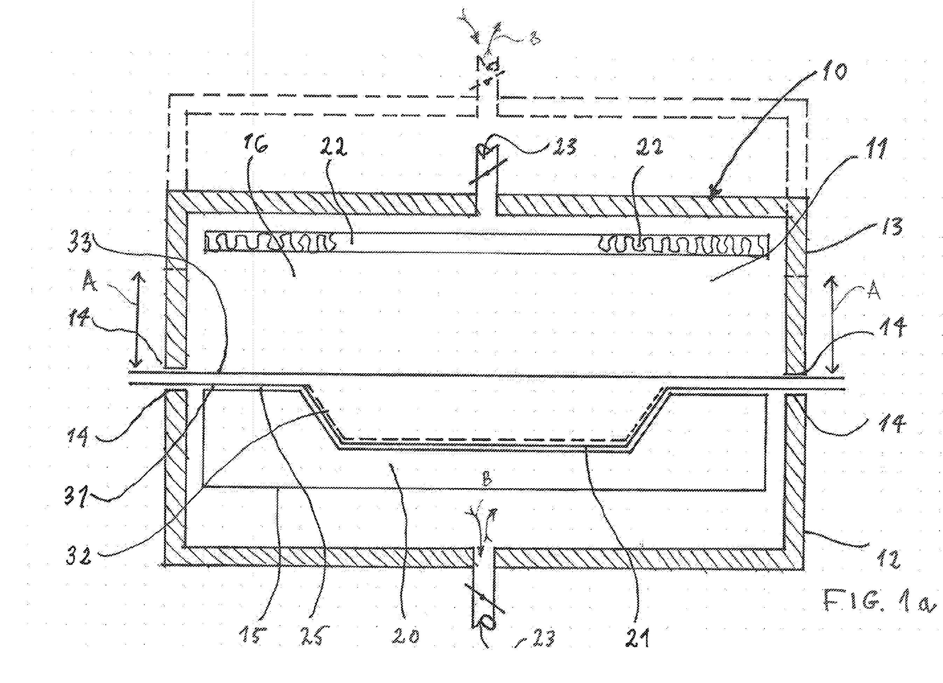

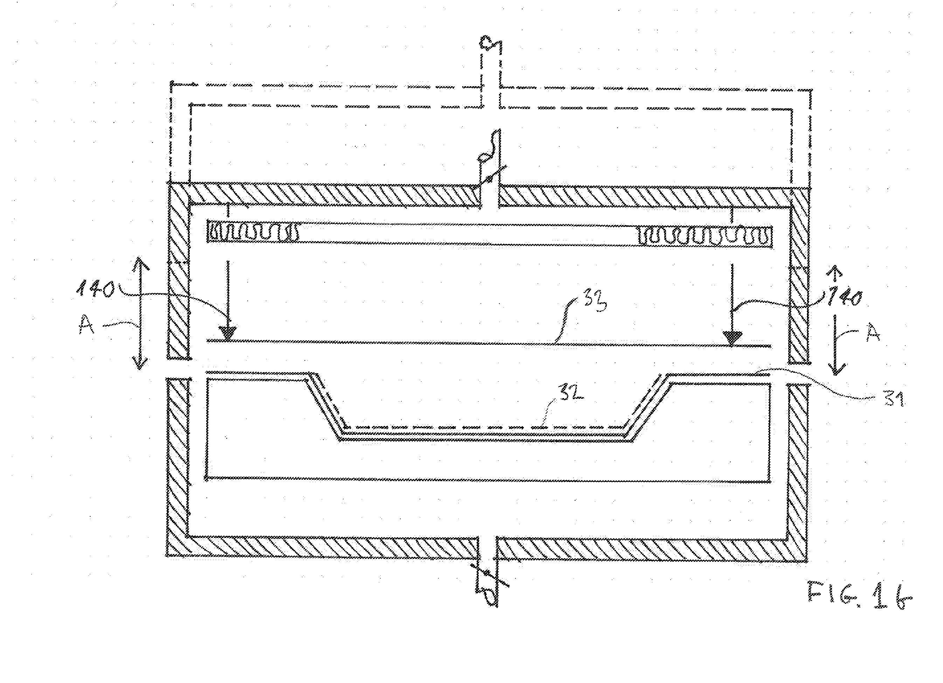

In figure 1 a schematic device 10 for manufacturing of laminate structures is illustrated. The device 10 comprises an air tight housing surrounding a manufacturing chamber 11. The size and design of the device 10, and the manufacturing chamber 11, are adapted to the intended articles that will be manufactured in the device. If smaller articles are manufactured, preferably more than one article is manufactured in each production cycle.

The housing comprises at least a first 12 and a second housing section 13 in order to be openable. If the housing 11 has a complex shape and/or a considerable size more than two housing sections could be advantageous. In the illustrated embodiment, both the first 12 and the second 13 section have a box shape with substantially identical dimensions. The first section 12 is arranged below the second section 13 and the rectangular surrounding edges 14 of each section meet in a plane substantially horizontal. The housing could however also have other shapes like for example cylindrical or spherical and arranged for example vertical depending on the shape and characteristics of the produced articles. The second section, positioned on top of the first section, is preferably arranged in some sort of lifting device that assists during opening and closing of the housing as well as the positioning of the first and second housing section in relation to each other. The relative movement between the first and second housing section is illustrated by arrow A in figure 1 a and 1 b. The lifting device is however not illustrated in the figures.

The surrounding edges of the first 12 and second 13 housing section that will be in contact to each other when the housing is closed are designed to provide the desired fastening of a foil when the foil is clamped between the edges 14 of the first and second housing section and the manufacturing chamber divided into a first 15 and a second 16 air tight compartment separated by the fastened foil. However, the fastening of the foil could also be achieved by use of an additional arrangement 140 i the manufacturing chamber. The arrangement 140 is preferably arranged around the inside surface of one of the housing sections 12, 13 since the arrangement 140 in combination with the fastened foil provided the dividing of the manufacturing chamber into the first and a second compartment. One example of this embodiment is schematically illustrated in figure 1 b.

A tight fitting between the edges of the housing sections 12, 13 is furthermore required to provide an air tight sealing of the housing which is necessary in order to reduce or increase the pressure within the first and second compartment during the manufacturing process.

In the illustrated embodiment of the device 10, a tool 20 is arranged in the first section 12 of the manufacturing chamber 11. The tool 20 is removably arranged in order to be replaceable when another type of article should be produced. In the top side of the tool 20 a mould 21 with the shape of the desired article is arranged. The top side of the tool is preferably positioned below the surrounding edge 14 of the first housing section 12 in order to not interfere with the foil that divides the manufacturing chamber.

Each of the housing sections 12, 13 comprises an air inlet/outlet 23. The air inlet/outlet is preferably arranged close to the centre of the first 15 and second 16 compartment. The number om inlets/outlets in each compartment could however be increased if the size of the device requires more than one inlet/outlet to be able to provide or evacuate larger quantities of air. The different inlet/outlets in each compartment are operable connected and controlled simultaneously.

To each air inlet/outlet 23 is provided with a valve, not illustrated, that makes it possible to control the flow of air, indicated by arrow B, through the inlet/outlet 23. The valve is either manually operated or controlled by automated control device. Furthermore a pump, not illustrated, is connected to the inlet/outlet 23 of the first 15 and second 16 compartment in order to make it possible to either evacuate air from the respective compartment or provide the desired supply of air to the compartments 15, 16. In a further embodiment of the device, a cooling and/or heating device is arranged together with the pump along a connecting pipe to be able to provide cooled or heated air to the compartment 15, 16 in order to speed up the manufacturing process.

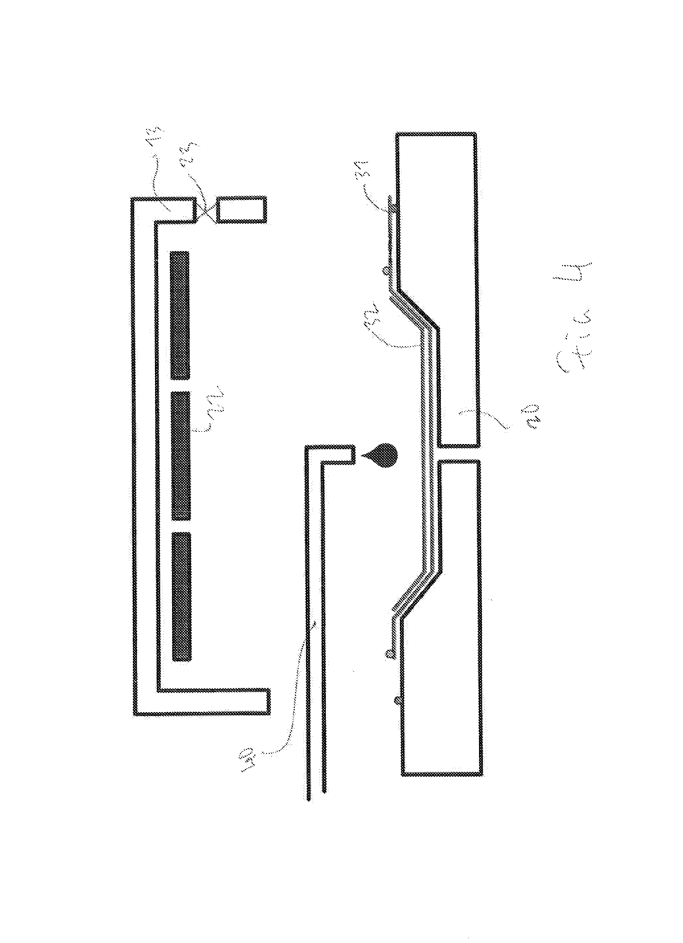

The device 10 furthermore comprises a device 40 for supply of resin into the mould 21. The resin supply device 40 comprises a resin storage tank from which resin is fed to one or more nozzles that makes it possible to apply resin and control the amount of resin applied in the mould. The resin supply device is either arranged outside the manufacturing chamber and the nozzle moved into the mould when the housing is open or permanently arranged in the manufacturing chamber 11. The resin supply device is not illustrated in figure 1 but schematically illustrated in figure 4.

Inside the housing, heating means 22 are arranged. The heating means are in the illustrated embodiment arranged in the second housing section 13 but could also be arranged in the first housing section 12, alternatively in both the first 12 and second 13 housing section in order to reduce the time required for heating. Different types of heating means could be used depending on the desired heating temperature. The heating means are primarily used for heating the foil but could of course also be used for initiating or speeding up the curing process of the resin before the laminate structure is removed from the mould.

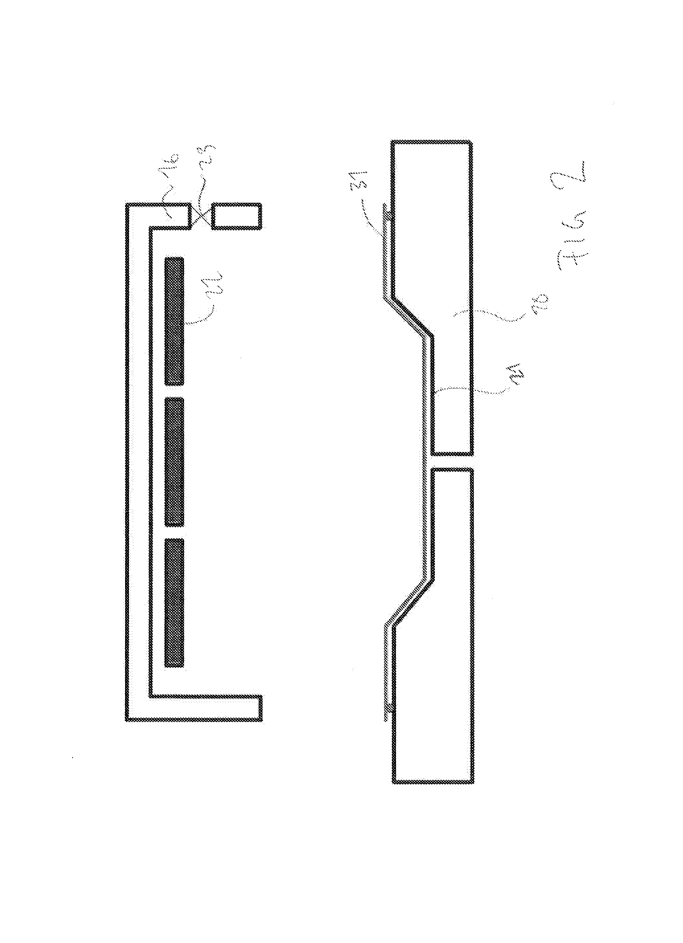

In one embodiment of the device 10 according to the invention, the mould 21 is provided with an air evacuation arrangement comprising one or more air inlet/outlets, alternatively an air permeable surface arranged in the mould, connected to a pump in order to able to suck a foil into the intended position within the mould. A schematic illustration of this embodiment is illustrated in figure 2 to 8.

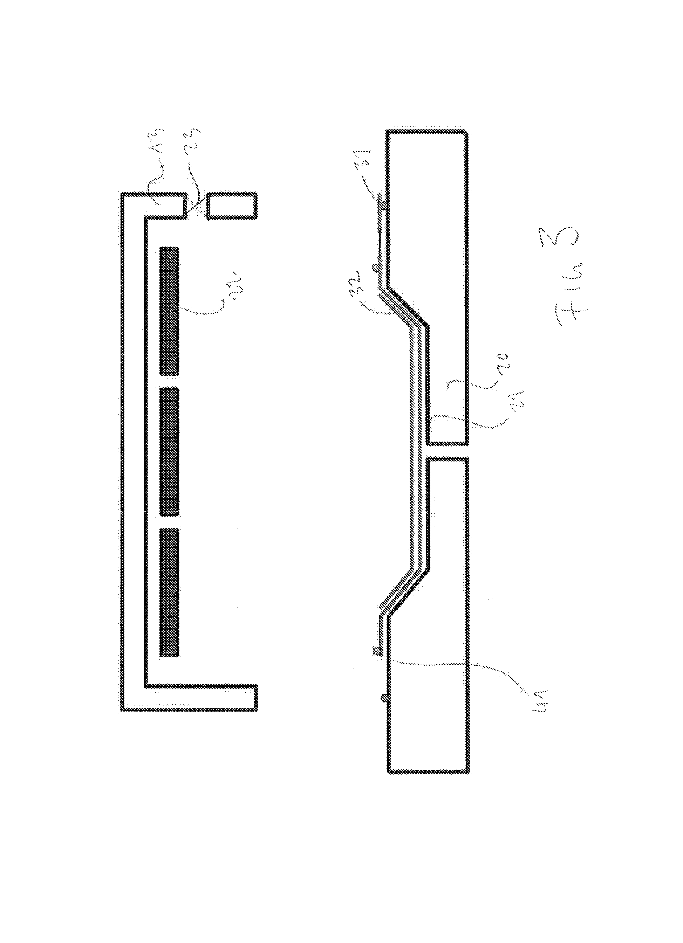

One embodiment of the device 10 for manufacturing of laminate structures comprises means for providing an air tight sealing between the first and second foil in the area 25 surrounding the mould 21. The sealing could be made in different ways depending on which type of materials the first and second foil are made of. If a thermoplastic material is used, the sealing could be achieved by melting the two foils and thereby joining the foils. Alternatively an adhesive 41 is applied in the area of the desired sealing between the foils. If an adhesive is used, the adhesive is preferably applied before the second foil is introduced in the manufacturing chamber, schematically illustrated in figure 3.

The described device 10 for manufacturing of laminate structures should be operated according to the claimed method for manufacturing of laminate structures. Each laminate structure comprises at least a first foil 31 serving as the surface with the desired shape and visual appearance, a reinforcement layer 32 that provides the structural strength to the article and a second foil 33 that closes the laminate structure and provides the inside surface of the article.

The first foil 31 of the laminate structure is selected to meet the desired features in regard of colour, surface texture, resistance against wear etc. The first foil is for example a thermoplastic foil that is easy to arrange and shape to the desired shape in the mould. Alternatively the first foil is pre-shaped in the desired shape to fit in the mould without further adjustments.

The reinforcement layer 32 comprises one or more types of fibres that, when the laminate structure is completed, will provide the desired structural properties such as strength, weight and appearance of the article. The fibres could for example be woven or tufted to mats with the desired properties and made of for example glass, carbon, polyester, wood, wool or any other type of fibre that provides the final laminate structure with the desired features. The reinforcement layer is either pre-shaped to fit in the mould or elastic to be able to be shaped to the desired shape in the mould. If a complex design of the article is desired the reinforcement layer must be pre-shaped.

The second foil 33 will be arranged on the inside surface of the laminate structure and the major reason for including it is that it is necessary for the advantageous claimed manufacturing method according to the invention. The second foil could be made of different material as long as it has the desired elasticity and is air tight which is essential in order to be able to use the claimed method for manufacturing of laminate structures. The second foil is for example a thermoplastic foil.

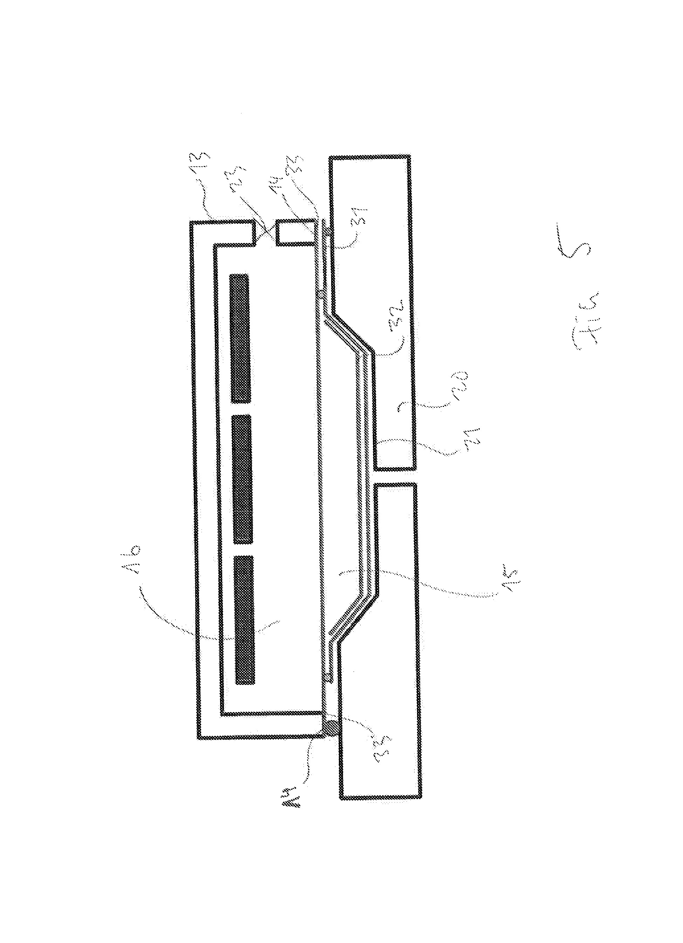

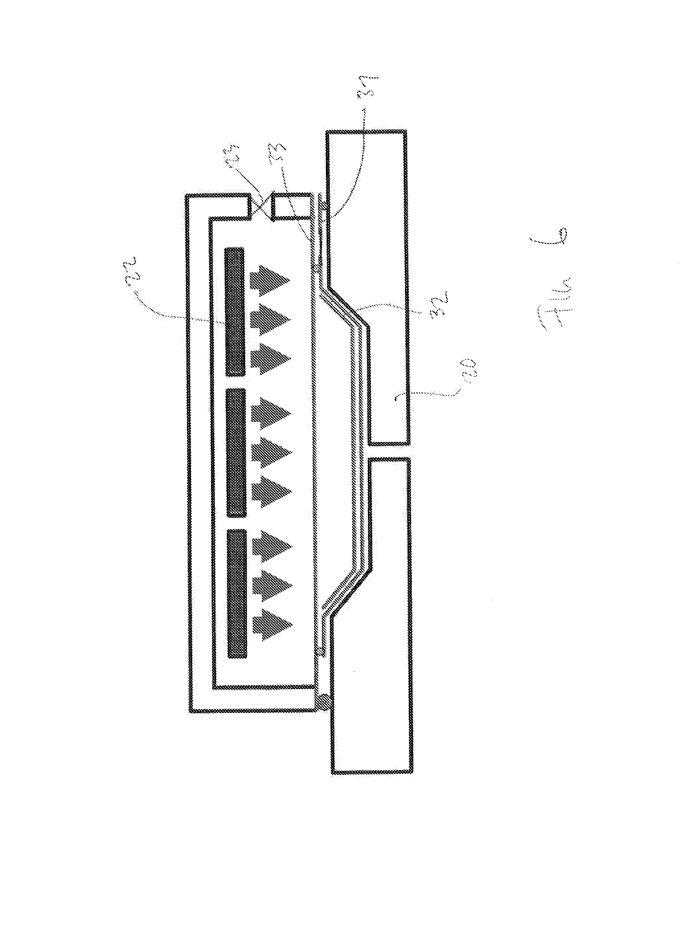

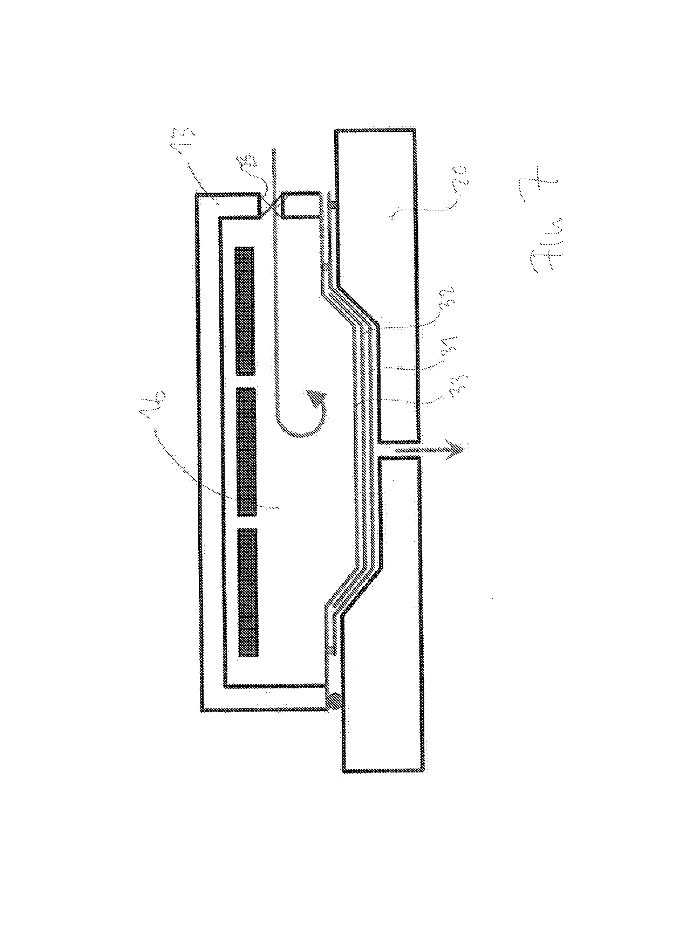

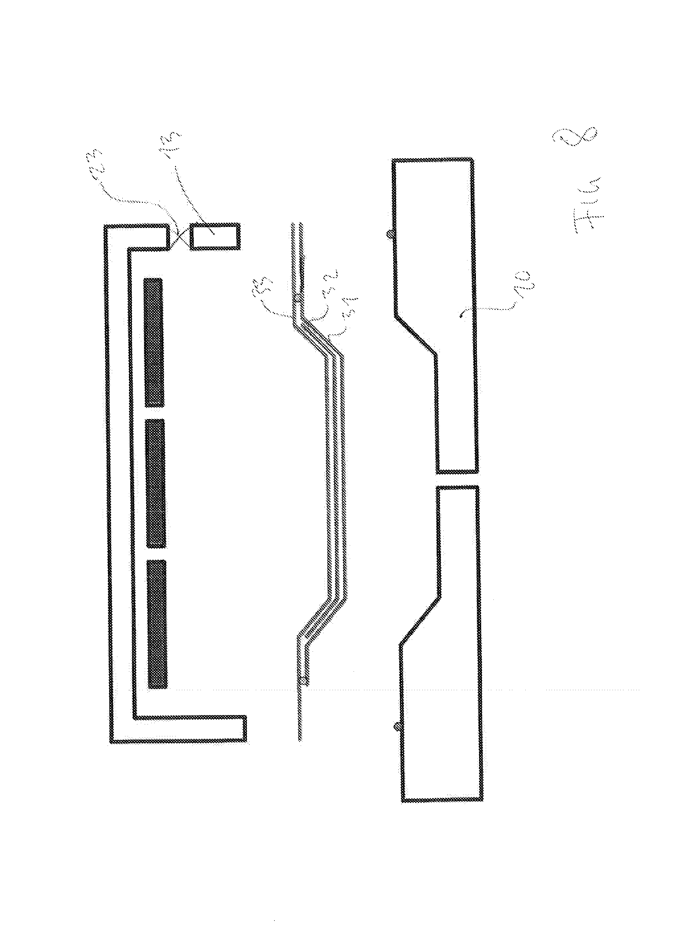

During manufacturing of laminate structures in the device (10) described above, the claimed method is used. In the device illustrated in figure 2 to 8 the tool is integrated with the first housing section and the inlet/outlet in the first compartment not shown in the figures. The different steps of the method are schematically illustrated in figures 2 to 8 and the method comprises the following steps:
- arranging a first foil 31 in the at least one mould 21 (figure 2). The first foil 31 is either arranged in the mould 21 manually or by a automated foil applying device that ensures a uniform result over time;
- arranging a reinforcement layer 32 on the first foil 31 in the mould 21 (figure 3). The characteristics of the reinforcement layer is described above;
- applying a predetermined amount of resin in a predetermined pattern on the reinforcement layer 32 (figure 4). The resin is applied by the resin applying device (40) that controls the amount of applied resin and ensures that the resin is spread in the mould 21 in order to ensure that the entire reinforcement layer 32 will be wetted.
- fasten a second foil 33 in the securing means for the foil (figure 5). The securing of the second foil 33 between the surrounding edges 14 of the first 12 and second 13 housing section divides the manufacturing chamber 11 into a first 15 and a second 16 compartment;
- close the housing in order to achieve the desired air tight sealing between the first 12 and second 13 housing section (figure 5);
- heat the second foil 33 to a temperature where the foil 33 becomes elastic (figure 6);
- reduce or increase the pressure in the first 15 and second 16 compartment simultaneously to a predetermined pressure. The reduction or increase of the air pressure within the first 15 and second 16 compartment must take place simultaneously to ensure that the second foil 33 that separates the first 15 and second 16 compartment remains intact and substantially flat without deformations (figure 6);
- depending on the selected action in the previous step which means that if the pressure was reduced in previous step, increase the pressure in the second compartment 16 where the tool not is arranged (figure 7), and if the pressure was increased in previous step reduce the pressure in the first compartment 15 where the tool 20 is arranged in order to achieve the desired deformation of the second foil 33 downwards into the mould 21; and finally
- maintain the laminate structure in the mould 21 for a predetermined time and then open the housing and remove the laminate structure (figure 8);

Further embodiments of the method are possible. First the method could comprises the additional steps of heating the first foil 31 before it is arranged in the mould 21 in order to increase the elasticity and flexibility of the first foil 21. The arranging of the first foil 31 in the mould 21 could be further facilitate and improved by use of an air evacuation arrangement that is sucking the first foil 31 downwards into the mould. This is schematically illustrated in figure 2 to 8.

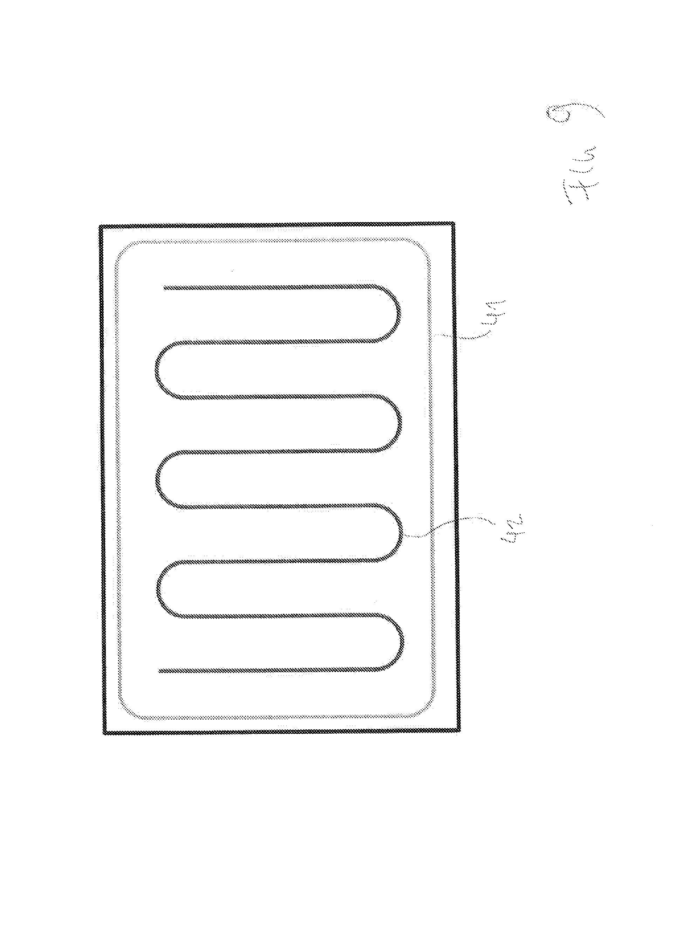

In one embodiment of the method, the resin is applied in a string drawn in a predetermined pattern without crossing the already applied string, or strings. One example of an advantageous pattern of resin 42 is illustrated in figure 9. This embodiment reduces the risk that air is trapped between crossing adhesive strings and the first 31 and second foil 33 which could reduce the overall strength of the articles. The pattern could be modified in several ways as long as no air is trapped between adjacent parts of the string or strings.

In one embodiment of the method, also the first foil 31 could be arranged in the mould 21 by use of the described steps where the foil is fastened in the securing means in order to create the first 15 and second 16 compartment. The first foil 31 is then arranged in the mould 21 by changing the pressures in the compartments 15, 16 according to the described method above.

The different embodiments described above could all be combined in different ways without departing from the scope of the invention that is defined by the appended claims.

## Claims

1. Device (10) for manufacturing of a laminate structure comprising at least one foil, said device (10) comprising:
an air tight housing enclosing a manufacturing chamber (11), said housing comprising at least a first (12) and a second (13) housing section and is openable;
a manufacturing tool (20) comprising at least one mould (21) in which one surface of the laminate structure is formed to the desired shape;
a resin applying device for applying resin in the mould (21), or moulds;
means for securing the foil of the laminate structure in the manufacturing chamber (11), said means secures said foil in such a way that the manufacturing chamber (11) is divided into a first (15) and a second (16) air tight compartment separated from each other by the foil in such a way that said tool (20) is arranged in one of the compartments;
heating means (22) for heating said foil, said means (22) are arranged in the first (15) and/or the second (16) compartment; and
means for reducing/increasing and controlling the pressure in each of said first (15) and section (16) compartment independently of each other.

2. Device (10) according to claim 1, wherein the device (10) comprises at least one air evacuation arrangement for each of the moulds (21) in the tool (20).

3. Device (10) according to claim 2, wherein the air evacuation arrangement comprises one or more air outlets, alternatively an air permeable surface, arranged in the mould.

4. Device (10) according to claim 1, wherein the foil of the laminate structure is clamped between the at least two housing sections (12, 13).

5. Device (10) according to claim 1, wherein the tool (20) is integrated in one of the at least two housing sections.

6. Device (10) according to claim 1, wherein the heating means (22) comprises at least one radiation heater.

7. Device (10) according to claim 1, wherein the means for reducing/increasing and controlling the pressure comprises at least one pump, at least one air inlet/outlet (23) and one valve for each of said first (15) and second (16) compartment in order to regulate the pressure in the compartments (15, 16), and monitoring means to be able to monitor the pressure in the first (15) and second (16) compartment.

8. Device according to claim 1, wherein the resin applying device comprises at least one nozzle in order to apply strings of resin in a predetermined pattern.

9. Device according to claim 1, further comprising means for providing an air tight sealing between two or more foils (31, 33) of a laminate structure, said means provides the sealing in the area (25) surrounding the mould (21).

10. Method for manufacturing a laminate structure in a device (10) according to claim 1, said method comprising the steps:
a) arranging a first foil (31) in the at least one mould (21);
b) arranging a reinforcement layer (32) on the first foil (31) in the mould (21);
c) applying a predetermined amount of resin in a predetermined pattern on the reinforcement layer (32);
d) fasten a second foil (33) in the securing means for the foil;
e) close the housing;
f) heat the second foil (33);
g) reduce or increase the pressure in the first (15) and second (16) compartment simultaneously to a predetermined pressure;
h) if the pressure was reduced in step g) increase the pressure in the compartment (16) where the tool (20) not is arranged, and if the pressure was increased in step g) reduce the pressure in the compartment (15) where the tool (20) is arranged; and
i) maintain the laminate structure in the mould (21) for a predetermined time and then open the housing and remove the laminate structure from the device (10);

11. Method according to claim 10, comprising the additional step of heating the first foil (31) before it is arranged in the mould (21).

12. Method according to claim 10, wherein the first foil (21) is arranged in the mould (21) by use of an air evacuation arrangement in the mould (21).

13. Method according to claim 10, wherein the resin is applied in a string drawn in a predetermined patterns without crossing the already applied string, or strings.

14. Method according to claim 10, further comprising the step of joining the first (31) and second (33) foil by an air tight sealing positioned outside the mould (21), said step is performed before the laminate structure is removed from the mould (21).

15. Method according to claim 10, comprising the additional step of either supply heated or cooled air into the first (15) and/or second (16) compartment in order to reduce the overall process time for manufacturing a laminate structure.
